(19) **Europäisches Patentamt** / **European Patent Office** / **Office européen des brevets**

(11) **EP 4 194 898 B1**

(12) **EUROPEAN PATENT SPECIFICATION**

(45) Date of publication and mention
of the grant of the patent:
**22.10.2025 Bulletin 2025/43**

(51) International Patent Classification (IPC):
**G01S 17/931** (2020.01)    **G05D 1/00** (2024.01)
**G01S 7/497** (2006.01)

(21) Application number: **22206760.5**

(52) Cooperative Patent Classification (CPC):
**G01S 17/931; G01S 7/497;** Y02A 90/10

(22) Date of filing: **10.11.2022**

(54) **METHOD AND SYSTEM FOR EVALUATING POINT CLOUD QUALITY OF LIDAR, AND APPARATUS**

VERFAHREN UND SYSTEM ZUR BEWERTUNG DER PUNKTWOLKENQUALITÄT VON LIDAR UND VORRICHTUNG

PROCÉDÉ ET SYSTÈME D'ÉVALUATION DE QUALITÉ DE NUAGE DE POINTS DE LIDAR, ET APPAREIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.12.2021 CN 202111509600**

(43) Date of publication of application:
**14.06.2023 Bulletin 2023/24**

(73) Proprietor: **Nio Technology (Anhui) Co., Ltd
Hefei City, Anhui 230601 (CN)**

(72) Inventors:
• **DENG, Yongzhang**
  **Jiading Shanghai (CN)**
• **GAO, Xianglong**
  **Jiading Shanghai (CN)**
• **RONG, Hao**
  **Jiading Shanghai (CN)**
• **ZHOU, Fuyuan**
  **Jiading Shanghai (CN)**
• **XIAO, Zhitao**
  **Jiading Shanghai (CN)**

(74) Representative: **Vossius & Partner
Patentanwälte Rechtsanwälte mbB
Siebertstraße 3
81675 München (DE)**

(56) References cited:
**DE-A1- 102019 117 821      US-A1- 2020 110 259
US-A1- 2020 150 243**

## Description

### Technical Field

The disclosure relates to the technical field of Lidars, and particularly provides a method and system for evaluating a point cloud quality of a Lidar, and an apparatus.

### Background Art

Lidar sensor is an important sensor and plays an increasingly important role in the fields of autonomous driving, exploration, and the like. Point cloud quality of a Lidar is related to the safety of the Lidar and is crucial to autonomous driving. At present, some methods for evaluating a point cloud quality of a Lidar involve placing a target at a certain distance from the outside of the Lidar, and measuring the point cloud quality of the Lidar by means of position information and distance information of the target. Such methods for evaluating a point cloud quality are greatly affected by other external objects, resulting in a low accuracy of evaluation results.

Correspondingly, a new solution for evaluating a point cloud quality of a Lidar is needed in the art to solve the above problem. US 2020/110259 A1 describes an optoelectronic sensor for detecting objects in a monitored zone. US 2020/150243 A1 relates to a laser scanner and more in particular to a distance measurement and/or safety laser scanner. DE 10 2019 117821 A1 relates to a method for calibrating an active optical sensor system using a calibration target.

### Summary of the Disclosure

To overcome the above defect, the disclosure is provided to solve or at least partially solve the technical problem that an existing method for evaluating a point cloud quality is greatly affected by other external objects, resulting in a low accuracy of evaluation results. The disclosure provides a method and system for evaluating a point cloud quality of a Lidar, and an apparatus.

The invention is specified by the independent claims. Preferred embodiments are defined in the dependent claims. In the following description, although numerous features may be designated as optional, it is nevertheless acknowledged that all features comprised in the independent claims are not to be read as optional.

The present invention has at least one or more of the following beneficial effects.

In the disclosure, the Lidar is novel in structure by providing the target in the Lidar, and interference of the object outside the vehicle may be prevented during the evaluation of the point cloud quality of the Lidar by using the target, thereby improving the evaluation accuracy of the point cloud quality.

The evaluation of the point cloud quality of the Lidar is implemented by providing the target in the Lidar, which may prevent the interference of the object outside the vehicle, thereby improving the evaluation accuracy of the point cloud quality.

In the disclosure, the point cloud quality of the Lidar may be first evaluated by using the target provided in the Lidar, and the object outside the vehicle may then be located by using the Lidar in the case of a good point cloud quality of the Lidar, which facilitates improving the locating accuracy for the object outside the vehicle and allowing for reliability of safe driving.

### Brief Description of the Drawings

The disclosed content of the disclosure will become more readily understood with reference to the accompanying drawings. Those skilled in the art readily understand that the accompanying drawings are merely for illustrative purposes and are not intended to limit the scope of protection of the disclosure. In addition, similar components are represented by similar numbers in the figures, in which:

FIG. 1 is a schematic diagram of a main structure of a Lidar according to an embodiment of the disclosure;
FIG. 2 is a schematic flowchart of main steps of a method for evaluating a point cloud quality of a Lidar according to an embodiment of the disclosure;
FIG. 3 is a schematic diagram of a principle of a method for evaluating a point cloud quality of a Lidar according to an embodiment of the disclosure;
FIG. 4 is a schematic diagram of main steps of a method for locating an object outside a vehicle based on a Lidar according to an embodiment of the disclosure; and
FIG. 5 is a schematic diagram of a principle of a method for locating an object outside a vehicle based on a Lidar according to an embodiment of the disclosure.

List of reference numerals:

11: Laser transmitter; 12: Laser detector; 13: Target; 14: Housing; 15: Mirror plane; and 16: Support rod.

## Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

At present, some methods for evaluating a point cloud quality of a Lidar involve placing a target at a certain distance from the outside of the Lidar, and measuring the point cloud quality of the Lidar by means of position information and distance information of the target. Such methods for evaluating a point cloud quality are greatly affected by other external objects, resulting in a low accuracy of evaluation results. For this reason, the disclosure provides a method and system for evaluating a point cloud quality of a Lidar, and an apparatus. The Lidar is novel in structure by providing the target in the Lidar and setting a reflectivity of a surface of the target to be greater than that of other objects in the Lidar, and interference of an object outside a vehicle may be prevented during evaluation of the point cloud quality of the Lidar by using the internal target, thereby improving the evaluation accuracy of the point cloud quality.

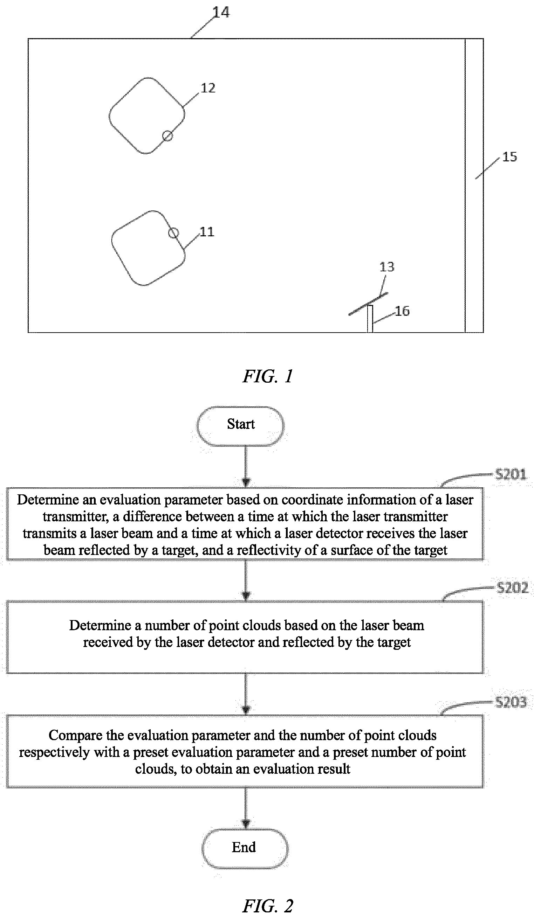

As shown in FIG 1, the Lidar in this embodiment of the disclosure includes a laser transmitter 11, a laser detector 12, a target 13, and a housing 14, where the laser transmitter 11, the laser detector 12, and the target 13 are all provided in the housing 14, and the target 13 is configured to receive a laser beam transmitted by the laser transmitter 11 and to reflect the laser beam to the laser detector 12.

In an implementation, as shown in FIG. 1, a mirror plane 15 is provided on the housing 14, and a reflectivity of a surface of the target 13 is greater than that of other components in the Lidar. In an implementation, the target 13 is provided at an edge of a field angle of the Lidar, and is provided at a preset position of an inner wall of the housing, where the preset position is an edge of a field of view (FOV). The target 13 is fixed at the edge of the FOV, such that the target 13 may be detected in each scanning cycle of the Lidar without affecting the FOV. Specifically, the target 13 in the embodiment may be an object in a rectangular iron-sheet shape or a slender shape, and a support component such as a support rod 16 may be connected in the middle of the target 13, such that the target 13 is fixed at the preset position of the inner wall of the housing 14 of the Lidar. Alternatively, the target 13 may be directly fixed at the preset position of the inner wall of the housing 14 without the aid of the support component.

Then, a surface of the target 13 is coated with a high-reflectivity material, which makes the reflectivity of the surface of the target greater than that of the other objects in the Lidar. As an optional example, the high-reflectivity material may be metal, paint, or the like. Certainly, any material that can make the reflectivity of the surface of the target greater than that of the other objects in the Lidar may be used as a target surface coating.

As an optional embodiment, the whole target may also be made of the high-reflectivity material that makes a reflectivity of the target greater than that of the other objects in the Lidar, instead of being coated with the high-reflectivity material only on the surface of the target.

In addition, the target 13 is provided at the preset position of the inner wall of the housing, at which it is preferably that, the target 13 is maintained in the scanning cycle of the Lidar and all laser beams transmitted by the laser transmitter 11 can hit the target 13.

The Lidar is novel in structure by providing the target in the Lidar and setting a reflectivity of a surface of the target to be greater than that of other objects in the Lidar, and interference of an object outside a vehicle may be prevented during evaluation of the point cloud quality of the Lidar by using the target, thereby improving the evaluation accuracy of the point cloud quality.

Referring to FIG. 2, FIG. 2 is a schematic flowchart of main steps of a method for evaluating a point cloud quality of a Lidar according to an embodiment of the disclosure. As shown in FIG. 2, the method for evaluating a point cloud quality of a Lidar in the embodiment of the disclosure mainly includes the following steps S201 to S203.

In step S201: An evaluation parameter is determined based on coordinate information of a laser transmitter, a difference between a time at which the laser transmitter transmits a laser beam and a time at which a laser detector receives the laser beam reflected by a target, and a reflectivity of a surface of the target. Specifically, the evaluation parameter includes a distance of the target from the laser transmitter, coordinate information of the target, and a reflectivity of the target to the laser beam. In the disclosure, determining an evaluation parameter based on coordinate information of a laser transmitter, a difference between a time at which the laser transmitter transmits a laser beam and a time at which a laser detector receives the laser beam reflected by a target, and a reflectivity of a surface of the target is specifically implemented by the following steps S2011 to S2013.

In step S2011: The distance of the target from the laser transmitter is determined based on the difference between the time at which the laser transmitter transmits the laser beam and the time at which the laser detector receives the laser beam. Specifically, the distance of the target from the laser transmitter may be calculated by Δt - c/2, where Δt is the difference between the time at which the laser transmitter transmits the laser beam to the target and the time at which the laser detector receives the laser beam, and c is a velocity of light.

In step S2012: Coordinate information of the target is determined based on the coordinate information of the laser transmitter and the distance of the target from the laser transmitter. Here, the coordinate information of the target may be coordinate information of the target relative to the laser transmitter. The coordinate information of the target may be determined with the laser transmitter as an origin of coordinates and in combination with the distance of the target from the laser transmitter.

In step S2013: The reflectivity of the target to the laser beam is determined based on the distance of the target from the laser transmitter, the reflectivity of the surface of the target, a transmit power of the laser transmitter, an incident angle of the laser beam, a transmission rate of the laser transmitter, an atmospheric transmission rate, and a receiver aperture for the laser detector, which is specifically determined by the following calculation formula:

$$P_R = (P_E * p * \cos\alpha * K_1 * K_2 * D_R^2) \div (4R^2) \ (1)$$

where $P_R$ is the reflectivity of the target to the laser beam, $P_E$ is the transmit power of the laser transmitter, p is the reflectivity of the surface of the target, $\alpha$ is the incident angle of the laser beam, $K_1$ is the transmission rate of the laser transmitter, specifically the transmission rate of the laser transmitter from an optical fiber to a transmission probe, $K_2$ is the atmospheric transmission rate, $D_R$ is the receiver aperture for the laser detector, and R is the distance of the target from the laser transmitter.

In step S202: A number of point clouds is determined based on the laser beam that is received by the laser detector and reflected by the target, that is, a number of laser beams received by the laser detector and reflected by the target is the number of point clouds.

In step S203: The evaluation parameter and the number of point clouds are compared respectively with a preset evaluation parameter and a preset number of point clouds, to obtain an evaluation result. Specifically, after the target is fixed, a corresponding test tool may be used to test the laser beam received by the laser detector. When a number of the laser beams received by the laser detector meets a preset condition, the number of the laser beams received by the laser detector is used as the preset number of point clouds. In the disclosure, the evaluation parameter and the number of point clouds are compared respectively with the preset evaluation parameter and the preset number of point clouds. When both the two comparisons indicate consistent, it indicates a better point cloud quality of the Lidar, and when at least one of the two comparisons indicates inconsistent, it indicates a poor point cloud quality of the Lidar. In addition, when at least one of the two comparisons indicates inconsistent, a corresponding parameter of the laser transmitter may be adjusted such that the evaluation parameter and the number of point clouds are respectively consistent with the preset evaluation parameter and the preset number of point clouds, thereby making the point cloud quality of the Lidar better.

Based on the above steps S201 to S203, the target is provided in the Lidar, and evaluation of the point cloud quality of the Lidar may be implemented by using the target, which may prevent the interference of an object outside a vehicle, thereby improving the evaluation accuracy of the point cloud quality.

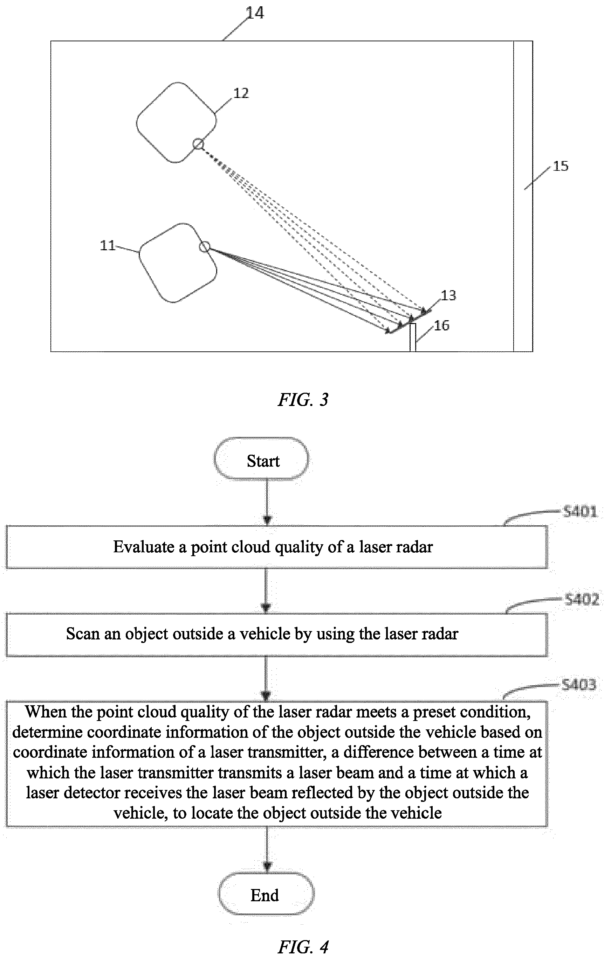

As shown in FIG. 3, when a target 13 is provided in a Lidar to evaluate a point cloud quality of the Lidar, the target 13 reflects a laser beam transmitted by a laser transmitter 11 to a laser detector 12. Then, a number of point clouds is determined based on the laser beam received by the laser detector and reflected by the target, and an evaluation parameter is determined based on coordinate information of the laser transmitter, a difference between a time at which the laser transmitter transmits the laser beam and a time at which the laser detector receives the laser beam reflected by the target, and a reflectivity of a surface of the target. At last, the number of point clouds is compared with a preset number of point clouds, and the evaluation parameter is compared with a preset evaluation parameter, to obtain an evaluation result.

It should be noted that, although various steps are described in a specific order in the foregoing embodiments, those skilled in the art can understand that in order to achieve the effects of the disclosure, different steps are not necessarily performed in such an order, but may be performed simultaneously (in parallel) or in other orders, and these changes shall all fall within the scope of protection of the disclosure.

Further, the disclosure also provides a system for evaluating a point cloud quality of a Lidar. The evaluation system in the embodiment of the disclosure mainly includes an obtaining module, a determination module, and an evaluation module. In some embodiments, one or more of the obtaining module, the determination module, and the evaluation module may be combined into one module. According to the invention, the obtaining module is configured to determine an evaluation parameter based on coordinate information of a laser transmitter, a difference between a time at which the laser transmitter transmits a laser beam and a time at which a laser detector receives the laser beam reflected by a target, and a reflectivity of a surface of the target. The determination module is configured to determine a number of point clouds based on the laser beam received by the laser detector and reflected by the target. The evaluation module is configured to compare the evaluation parameter and the number of poin clouds respectively with a preset evaluation parameter and a preset number of point clouds, to obtain an evaluation result. In an implementation, for detailed description of function implementation, reference may be made to the descriptions of steps S201 to S203.

According to the invention, the evaluation parameter includes a distance of the target from the laser transmitter, coordinate information of the target, and a reflectivity of the target to the laser beam; the obtaining module includes a distance determination module, a coordinate determination module, and a reflectivity determination module, where the distance determination module may be configured to determine the distance of the target from the laser transmitter based on the coordinate information of the laser transmitter and the difference between the time at which the laser transmitter transmits the laser beam and the time at which the laser detector receives the laser beam; the coordinate determination module may be configured to determine the coordinate information of the target based on the coordinate information of the laser transmitter, the distance of the target from the laser transmitter, and an included angle between the target and the laser transmitter; and the reflectivity determination module may be configured to determine the reflectivity of the target to the laser beam based on the distance of the target from the laser transmitter, the reflectivity of the surface of the target, a transmit power of the laser transmitter, an incident angle of the laser beam, a transmission rate of the laser transmitter, an atmospheric transmission rate, and a receiver aperture for the laser detector, where a calculation formula for the reflectivity of the target to the laser beam is as follows:

$$P_R = (P_E * p * \cos\alpha * K_1 * K_2 * D_R^2) \div (4R^2) \ (1)$$

where $P_R$ is the reflectivity of the target to the laser beam, $P_E$ is the transmit power of the laser transmitter, p is the reflectivity of the surface of the target, $\alpha$ is the incident angle of the laser beam, $K_1$ is the transmission rate of the laser transmitter, $K_2$ is the atmospheric transmission rate, $D_R$ is the receiver aperture for the laser detector, and $R$ is the distance of the target from the laser transmitter.

The foregoing system for evaluating a point cloud quality of a Lidar is used to implement the embodiment of the method for evaluating a point cloud quality of a Lidar shown in FIG. 2, and the technical principles of, technical problems to be solved by, and technical effects provided by the evaluation system and the evaluation method are similar. Those skilled in the art can clearly understand that, for convenience and brevity of the description, for a specific working process and a related description of the system for evaluating a point cloud quality of a Lidar, reference may be made to the description of the embodiments of the method for evaluating a point cloud quality of a Lidar, and details are not described herein again.

Those skilled in the art can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments can be implemented. The computer program includes computer program code, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Further, the disclosure also provides a vehicle, which includes a Lidar and a system for evaluating a point cloud quality of a Lidar.

Further, the disclosure also provides a method for locating an object outside a vehicle based on a Lidar. As shown in FIG. 4, the locating method includes the following steps S401 to S403.

In step S401: A point cloud quality of a Lidar is evaluated by using a method for evaluating a point cloud quality of a Lidar. The point cloud quality is evaluated mainly from two aspects: an evaluation parameter and a number of point clouds. For a specific evaluation method, reference may be made to the specific description of the method for evaluating a point cloud quality of a Lidar in the foregoing embodiment, and details are not described herein again.

In step S402: An object outside a vehicle is scanned by using the Lidar. Here, the object outside the vehicle may be another vehicle, human, or obstacle, which is not limited thereto.

In step S403: When the point cloud quality of the Lidar meets a preset condition, for example, when an evaluation parameter is greater than a preset evaluation parameter and a number of point clouds is greater than a preset number of point clouds, coordinate information of the object outside the vehicle is then determined based on coordinate information of a laser transmitter, a difference between a time at which the laser transmitter transmits a laser beam and a time at which a laser detector receives the laser beam reflected by the object outside the vehicle, to locate the object outside the vehicle. Specifically, locating the object outside the vehicle here may be determining a distance of the object outside the vehicle from the laser transmitter, coordinate information of the object outside the vehicle, a reflectivity of the object outside the vehicle to the laser beam, and the like. The distance of the object outside the vehicle from the laser transmitter may be calculated by $\Delta T \cdot c/2$, where $\Delta T$ is the difference between the time at which the laser transmitter transmits the laser beam to the object outside the vehicle and the time at which the laser detector receives the laser beam, and c is a velocity of light. After the distance of the object outside the vehicle from the laser transmitter is obtained, the coordinate information of the object outside the vehicle may be determined based on the coordinate information of the laser transmitter and the distance of the target from the laser transmitter. In addition, for a determination method for a reflectivity of the target to the laser beam, reference may be made to formula (1) in the foregoing embodiment, and details are not described herein again.

In the disclosure, the use of the Lidar with the target provided internally, compared with the Lidar with the target provided externally, can effectively prevent the impacts of external circumstances on target detection, and can also eliminate the need to re-calibrate the external target, which results from deflection of a relative position between the Lidar and the target due to movement of the Lidar. The calculation of the object outside the vehicle when the point cloud quality of the Lidar is evaluated to meet the preset condition allows for a higher locating accuracy for the object outside the vehicle.

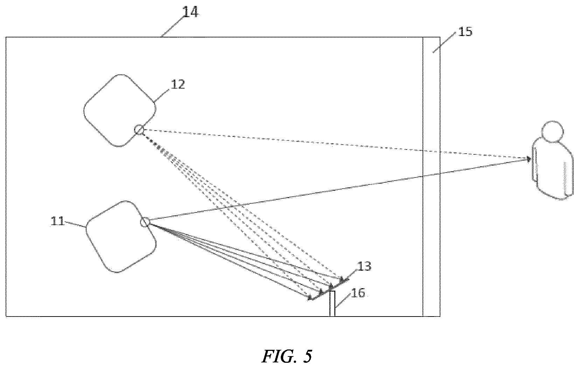

As shown in FIG. 5, the final locating of the object outside the vehicle is implemented by the laser transmitter first transmitting the laser beam to the target to evaluate the point cloud quality of the Lidar, and then transmitting the laser beam to the object outside the vehicle, which ensures the locating accuracy for the object outside the vehicle.

Further, the disclosure also provides a vehicle, which includes a Lidar, a system for evaluating a point cloud quality of a Lidar, and a locating system, where the system for evaluating a point cloud quality of a Lidar is configured to evaluate a point cloud quality of a Lidar; the Lidar is configured to scan an object outside the vehicle; and the locating system is configured to, when the point cloud quality of the Lidar meets a preset condition, determine coordinate information of the object outside the vehicle based on coordinate information of a laser transmitter, a difference between a time at which the laser transmitter transmits a laser beam and a time at which a laser detector receives the laser beam reflected by the object outside the vehicle, to locate the object outside the vehicle.

The foregoing vehicle is used to implement the embodiment of the method for locating an object outside a vehicle based on a Lidar shown in FIG. 4, and the technical principles of, technical problems to be solved by, and technical effects provided by the evaluation system and the evaluation method are similar. Those skilled in the art can clearly understand that, for convenience and brevity of the description, for a specific working process and a related description of the vehicle, reference may be made to the description of the embodiments of the method for locating an object outside a vehicle based on a Lidar, and details are not described herein again.

Further, the disclosure also provides a control apparatus. In an embodiment of the control apparatus according to the disclosure, the control apparatus includes a processor and a storage apparatus. The storage apparatus may be configured to store a program for executing a method for evaluating a point cloud quality of a Lidar or a method for locating an object outside a vehicle based on a Lidar in the foregoing method embodiment, and the processor may be configured to execute the program in the storage apparatus. The program includes, but is not limited to, the program for executing the method for evaluating a point cloud quality of a Lidar or the method for locating an object outside a vehicle based on a Lidar in the foregoing method embodiment. For ease of description, only parts related to the embodiments of the disclosure are shown. For specific technical details that are not disclosed, reference may be made to the method part of the embodiments of the disclosure. The control apparatus may be a control apparatus device formed by various electronic devices.

Further, the disclosure also provides a computer-readable storage medium. In an embodiment of the computer-readable storage medium according to the disclosure, the computer-readable storage medium may be configured to store a program for executing a method for evaluating a point cloud quality of a Lidar or a method for locating an object outside a vehicle based on a Lidar in the foregoing method embodiment, and the program may be loaded and run by a processor to implement the foregoing method for evaluating a point cloud quality of a Lidar or the foregoing method for locating an object outside a vehicle based on a Lidar. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, it should be understood that, because the configuration of modules is merely intended to illustrate functional units of the apparatus of the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules does not cause the technical solutions to depart from the principle of the disclosure. Therefore, technical solutions after any such split or combination shall fall within the scope of protection of the disclosure.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. Those skilled in the art can make equivalent changes or substitutions to the related technical features without departing from the principle of the disclosure, and all the technical solutions with such changes or substitutions shall fall within the scope of protection of the disclosure.

## Claims

1. A method for evaluating a point cloud quality of a Lidar, wherein the Lidar comprises a laser transmitter (11), a laser detector (12), a target (13), and a housing (14), wherein the laser transmitter (11), the laser detector (12), and the target (13) are all provided in the housing (14), and the target (13) is configured to receive a laser beam transmitted by the laser transmitter (11) and to reflect the laser beam to the laser detector (12),
   **characterized in that**:
   the evaluation method comprises the following steps:

   determining (S201) an evaluation parameter based on coordinate information of the laser transmitter, a difference between a time at which the laser transmitter transmits a laser beam and a time at which a laser detector receives the laser beam reflected by a target, and a reflectivity of a surface of the target, wherein the evaluation parameter comprises a distance of the target from the laser transmitter, coordinate information of the target, and a reflectivity of the target to the laser beam;
   determining (S202) a number of point clouds based on a number of laser beams received by the laser detector and reflected by the target; and
   comparing (S203) the evaluation parameter and the number of point clouds respectively with a preset evaluation parameter and a preset number of point clouds, to obtain an evaluation result of the point cloud quality of the Lidar.

2. The method for evaluating a point cloud quality of a Lidar according to claim 1,
   determining an evaluation parameter based on coordinate information of the laser transmitter, a difference between a time at which the laser transmitter transmits a laser beam and a time at which a laser detector receives the laser beam reflected by a target, and a reflectivity of a surface of the target comprises:

   determining the distance of the target from the laser transmitter based on the difference between the time at which the laser transmitter transmits the laser beam and the time at which the laser detector receives the laser beam;
   determining the coordinate information of the target based on the coordinate information of the laser transmitter and the distance of the target from the laser transmitter; and
   determining the reflectivity of the target to the laser beam based on the distance of the target from the laser transmitter, the reflectivity of the surface of the target, a transmit power of the laser transmitter, an incident angle of the laser beam, a transmission rate of the laser transmitter, an atmospheric transmission rate, and a receiver aperture for the laser detector, wherein a calculation formula for the reflectivity of the target to the laser beam is as follows:

$$P_R = (P_E * p * \cos\alpha * K_1 * K_2 * D_R^2) \div (4R^2)$$

   wherein $P_R$ is the reflectivity of the target to the laser beam, $P_E$ is the transmit power of the laser transmitter, $p$ is the reflectivity of the surface of the target, $\alpha$ is the incident angle of the laser beam, $K_1$ is the transmission rate of the laser transmitter, $K_2$ is the atmospheric transmission rate, $D_R$ is the receiver aperture for the laser detector, and $R$ is the distance of the target from the laser transmitter.

3. The method for evaluating a point cloud quality of a Lidar according to claim 1 or 2, wherein a mirror plane (15) is provided on the housing, and a reflectivity of a surface of the target is greater than that of other components in the Lidar.

4.  The method for evaluating a point cloud quality of a Lidar according to any one of claims 1-3, wherein the target is provided at an edge of a field angle of the Lidar and is provided at a preset position of an inner wall of the housing.

5.  A system for evaluating a point cloud quality of a Lidar, which is applied to a Lidar, wherein the Lidar comprises a laser transmitter (11), a laser detector (12), a target (13), and a housing (14), wherein the laser transmitter (11), the laser detector (12), and the target (13) are all provided in the housing (14), and the target (13) is configured to receive a laser beam transmitted by the laser transmitter (11) and to reflect the laser beam to the laser detector (12),
    **characterized in that**:
    the evaluation system comprises:

    an obtaining module configured to determine an evaluation parameter based on coordinate information of a laser transmitter, a difference between a time at which the laser transmitter transmits a laser beam and a time at which a laser detector receives the laser beam reflected by a target, and a reflectivity of a surface of the target, wherein the evaluation parameter comprises a distance of the target from the laser transmitter, coordinate information of the target, and a reflectivity of the target to the laser beam;
    a determination module configured to determine a number of point clouds based on a number of laser beams received by the laser detector and reflected by the target; and
    an evaluation module configured to compare the evaluation parameter and the number of point clouds respectively with a preset evaluation parameter and a preset number of point clouds, to obtain an evaluation result of the point cloud quality of the Lidar.

6.  The system for evaluating a point cloud quality of a Lidar according to claim 5, wherein the obtaining module comprises:

    a distance determination module configured to determine the distance of the target from the laser transmitter based on the difference between the time at which the laser transmitter transmits the laser beam and the time at which the laser detector receives the laser beam;
    a coordinate determination module configured to determine the coordinate information of the target based on the coordinate information of the laser transmitter and the distance of the target from the laser transmitter; and
    a reflectivity determination module configured to determine the reflectivity of the target to the laser beam based on the distance of the target from the laser transmitter, the reflectivity of the surface of the target, a transmit power of the laser transmitter, an incident angle of the laser beam, a transmission rate of the laser transmitter, an atmospheric transmission rate, and a receiver aperture for the laser detector, wherein a calculation formula for the reflectivity of the target to the laser beam is as follows:

    $$P_R = (P_E * p * \cos \alpha * K_1 * K_2 * D_R^2) \div (4R^2)$$

    wherein $P_R$ is the reflectivity of the target to the laser beam, $P_E$ is the transmit power of the laser transmitter, $p$ is the reflectivity of the surface of the target, $\alpha$ is the incident angle of the laser beam, $K_1$ is the transmission rate of the laser transmitter, $K_2$ is the atmospheric transmission rate, $D_R$ is the receiver aperture for the laser detector, and $R$ is the distance of the target from the laser transmitter.

7.  The system for evaluating a point cloud quality of a Lidar according to claim 5 or 6, wherein a mirror plane (15) is provided on the housing, and a reflectivity of a surface of the target is greater than that of other components in the Lidar.

8.  The system for evaluating a point cloud quality of a Lidar according to any one of claims 5-7, wherein the target is provided at an edge of a field angle of the Lidar and is provided at a preset position of an inner wall of the housing.

9.  A vehicle, **characterized by** comprising the Lidar and the system according to any one of claims 5 to 8.

10. A method for locating an object outside a vehicle based on a Lidar, **characterized in that** the locating method comprises the following steps:

    evaluating (S401) a point cloud quality of a Lidar by using a method for evaluating a point cloud quality of a Lidar according to any one of claims 1 and 4;
    scanning (S402) the object outside the vehicle by using the Lidar; and
    when the point cloud quality of the Lidar meets a preset condition, determining (S403) coordinate information of the object outside the vehicle based on coordinate information of a laser transmitter, a difference between a time at which the laser transmitter transmits a laser beam and a time at which a laser detector receives the laser beam reflected by the object outside the vehicle, to locate the object outside the vehicle.

11. A vehicle, **characterized by** comprising the Lidar and the system according to any one of claims 5 to 8 and a locating system, wherein
the locating system is configured to, when the point cloud quality of the Lidar meets a preset condition, determine coordinate information of the object outside the vehicle based on coordinate information of a laser transmitter, a difference between a time at which the laser transmitter transmits a laser beam and a time at which a laser detector receives the laser beam reflected by the object outside the vehicle, to locate the object outside the vehicle.

12. A control apparatus, including a processor and a storage apparatus adapted to store a plurality of pieces of program code, where the pieces of program code are adapted to be loaded and run by the processor to perform a method for evaluating a point cloud quality of a Lidar according to any one of claims 1- 4, or to perform a method for locating an object outside a vehicle based on a Lidar according to claim 10.

13. A computer-readable storage medium having a plurality of pieces of program code stored therein, where the pieces of program code are adapted to be loaded and run by a processor to perform a method for evaluating a point cloud quality of a Lidar according to any one of claims 1-4, or to perform a method for locating an object outside a vehicle based on a Lidar according to claim 10.

**Patentansprüche**

1. Verfahren zum Bewerten einer Punktwolkenqualität eines Lidars, wobei das Lidar einen Lasersender (11), einen Laserdetektor (12), ein Ziel (13) und ein Gehäuse (14) umfasst, wobei der Lasersender (11), der Laserdetektor (12) und das Ziel (13) alle in dem Gehäuse (14) bereitgestellt werden, und das Ziel (13) ausgelegt ist, um einen von dem Lasersender (11) gesendeten Laserstrahl zu empfangen und den Laserstrahl zu dem Laserdetektor (12) zu reflektieren,
**dadurch gekennzeichnet, dass**
das Bewertungsverfahren die folgenden Schritte umfasst:

Bestimmen (S201) eines Bewertungsparameters basierend auf Koordinateninformationen des Lasersenders, einer Differenz zwischen einer Zeit, zu der der Lasersender einen Laserstrahl sendet, und einer Zeit, zu der ein Laserdetektor den von einem Ziel reflektierten Laserstrahl empfängt, und einer Reflektivität einer Oberfläche des Ziels, wobei der Bewertungsparameter einen Abstand des Ziels von dem Lasersender, Koordinateninformationen des Ziels und eine Reflektivität des Ziels für den Laserstrahl umfasst;
Bestimmen (S202) einer Anzahl an Punktwolken basierend auf einer Anzahl an Laserstrahlen, die von dem Laserdetektor empfangen und von dem Ziel reflektiert wurden; und
Vergleichen (S203) des Bewertungsparameters beziehungsweise der Anzahl der Punktwolken mit einem vorgegebenen Bewertungsparameter und einer vorgegebenen Anzahl an Punktwolken, um ein Bewertungsergebnis der Punktwolkenqualität des Lidars zu erhalten.

2. Verfahren zum Bewerten einer Punktwolkenqualität eines Lidars nach Anspruch 1, wobei
Bestimmen eines Bewertungsparameters basierend auf Koordinateninformationen des Lasersenders, einer Differenz zwischen einer Zeit, zu der der Lasersender einen Laserstrahl sendet, und einer Zeit, zu der ein Laserdetektor den von einem Ziel reflektierten Laserstrahl empfängt, und einer Reflektivität einer Oberfläche des Ziels umfasst:

Bestimmen des Abstands des Ziels von dem Lasersender basierend auf der Differenz zwischen der Zeit, zu der der Lasersender den Laserstrahl sendet, und der Zeit, zu der der Laserdetektor den Laserstrahl empfängt;
Bestimmen der Koordinateninformationen des Ziels basierend auf den Koordinateninformationen des Lasersenders und dem Abstand des Ziels von dem Lasersender; und
Bestimmen der Reflektivität des Ziels für den Laserstrahl basierend auf dem Abstand des Ziels von dem Lasersender, der Reflektivität der Oberfläche des Ziels, einer Sendeleistung des Lasersenders, einem Einfallswinkel des Laserstrahls, einer Übertragungsrate des Lasersenders, einer atmosphärischen Übertragungsrate und einer Empfängerblende für den Laserdetektor, wobei eine Berechnungsformel für die Reflektivität des Ziels für den Laserstrahl wie folgt ist:

$$P_R = (P_E * p * \cos\alpha * K_1 * K_2 * D_R^2) \div (4R^2)$$

wobei $P_R$ die Reflektivität des Ziels für den Laserstrahl ist, $P_E$ die Sendeleistung des Lasersenders ist, p die Reflektivität der Oberfläche des Ziels ist, $\alpha$ der Einfallswinkel des Laserstrahls ist, $K_2$ die Übertragungsrate des Lasersenders ist, $K_2$ die atmosphärische Übertragungsrate ist, $D_R$ die Empfängerblende für den Laserdetektor ist, und R der Abstand des Ziels von dem Lasersender ist.

3.  Verfahren zum Bewerten einer Punktwolkenqualität eines Lidars nach Anspruch 1 oder 2, wobei auf dem Gehäuse eine Spiegelebene (15) bereitgestellt wird, und eine Reflektivität einer Oberfläche des Ziels größer als diejenige von anderen Komponenten in dem Lidar ist.

4.  Verfahren zum Bewerten einer Punktwolkenqualität eines Lidars nach einem der Ansprüche 1 bis 3, wobei das Ziel an einem Rand eines Feldwinkels des Lidars bereitgestellt wird und an einer vorgegebenen Position an einer Innenwand des Gehäuses bereitgestellt wird.

5.  System zum Bewerten einer Punktwolkenqualität eines Lidars, welches auf ein Lidar angewendet wird, wobei das Lidar einen Lasersender (11), einen Laserdetektor (12), ein Ziel (13) und ein Gehäuse (14) umfasst, wobei der Lasersender (11), der Laserdetektor (12) und das Ziel (13) alle in dem Gehäuse (14) bereitgestellt werden, und das Ziel (13) ausgelegt ist, um einen von dem Lasersender (11) gesendeten Laserstrahl zu empfangen und den Laserstrahl zu dem Laserdetektor (12) zu reflektieren, **dadurch gekennzeichnet, dass**:
    das Bewertungssystem umfasst:

    ein Erhaltemodul, das ausgelegt ist zum Bestimmen eines Bewertungsparameters basierend auf Koordinateninformationen eines Lasersenders, einer Differenz zwischen einer Zeit, zu der der Lasersender einen Laserstrahl sendet, und einer Zeit, zu der ein Laserdetektor den von einem Ziel reflektierten Laserstrahl empfängt, und einer Reflektivität einer Oberfläche des Ziels, wobei der Bewertungsparameter einen Abstand des Ziels von dem Lasersender, Koordinateninformationen des Ziels und eine Reflektivität des Ziels für den Laserstrahl umfasst;
    ein Bestimmungsmodul, das ausgelegt ist zum Bestimmen einer Anzahl an Punktwolken basierend auf einer Anzahl an Laserstrahlen, die von dem Laserdetektor empfangen und von dem Ziel reflektiert wurden; und
    ein Bewertungsmodul, das ausgelegt ist zum Vergleichen des Bewertungsparameters beziehungsweise der Anzahl der Punktwolken mit einem vorgegebenen Bewertungsparameter und einer vorgegebenen Anzahl an Punktwolken, um ein Bewertungsergebnis der Punktwolkenqualität des Lidars zu erhalten.

6.  System zum Bewerten einer Punktwolkenqualität eines Lidars nach Anspruch 5, wobei das Erhaltemodul umfasst:

    ein Abstandbestimmungsmodul, das ausgelegt ist zum Bestimmen des Abstands des Ziels von dem Lasersender basierend auf der Differenz zwischen der Zeit, zu der der Lasersender den Laserstrahl sendet, und der Zeit, zu der der Laserdetektor den Laserstrahl empfängt;
    ein Koordinatenbestimmungsmodul, das ausgelegt ist zum Bestimmen der Koordinateninformationen des Ziels basierend auf den Koordinateninformationen des Lasersenders und dem Abstand des Ziels von dem Lasersender; und
    ein Reflektivitätsbestimmungsmodul, das ausgelegt ist zum Bestimmen der Reflektivität des Ziels für den Laserstrahl basierend auf dem Abstand des Ziels von dem Lasersender, der Reflektivität der Oberfläche des Ziels, einer Sendeleistung des Lasersenders, einem Einfallswinkel des Laserstrahls, einer Übertragungsrate des Lasersenders, einer atmosphärischen Übertragungsrate und einer Empfängerblende für den Laserdetektor, wobei eine Berechnungsformel für die Reflektivität des Ziels für den Laserstrahl wie folgt ist:

$$P_R = (P_E * p * \cos\alpha * K_1 * K_2 * D_R^2) \div (4R^2)$$

wobei $P_R$ die Reflektivität des Ziels für den Laserstrahl ist, $P_E$ die Sendeleistung des Lasersenders ist, p die Reflektivität der Oberfläche des Ziels ist, $\alpha$ der Einfallswinkel des Laserstrahls ist, $K_1$ die Übertragungsrate des Lasersenders ist, $K_2$ die atmosphärische Übertragungsrate ist, $D_R$ die Empfängerblende für den Laserdetektor ist, und R der Abstand des Ziels von dem Lasersender ist.

7.  System zum Bewerten einer Punktwolkenqualität eines Lidars nach Anspruch 5 oder 6, wobei auf dem Gehäuse eine Spiegelebene (15) bereitgestellt wird, und eine Reflektivität einer Oberfläche des Ziels größer als diejenige von anderen Komponenten in dem Lidar ist.

8. System zum Bewerten einer Punktwolkenqualität eines Lidars nach einem der Ansprüche 5 bis 7, wobei das Ziel an einem Rand eines Feldwinkels des Lidars bereitgestellt wird und an einer vorgegebenen Position an einer Innenwand des Gehäuses bereitgestellt wird.

9. Fahrzeug, **dadurch gekennzeichnet, dass** es das Lidar und das System nach einem der Ansprüche 5 bis 8 umfasst.

10. Verfahren zum Orten eines Objekts außerhalb eines Fahrzeugs basierend auf Lidar, **dadurch gekennzeichnet, dass** das Ortungsverfahren die folgenden Schritte umfasst:

Bewerten (S401) einer Punktwolkenqualität eines Lidars unter Verwendung eines Verfahrens zum Bewerten einer Punktwolkenqualität eines Lidars nach einem der Ansprüche 1 oder 4;
Scannen (S402) des Objekts außerhalb des Fahrzeugs unter Verwendung des Lidars; und
wenn die Punktwolkenqualität des Lidars eine vorgegebene Bedingung erfüllt, Bestimmen (S403) von Koordinateninformationen des Objekts außerhalb des Fahrzeugs basierend auf Koordinateninformationen eines Lasersenders, einer Differenz zwischen einer Zeit, zu der der Lasersender einen Laserstrahl sendet, und einer Zeit, zu der ein Laserdetektor den von dem Objekt außerhalb des Fahrzeugs reflektierten Laserstrahl empfängt, um das Objekt außerhalb des Fahrzeugs zu orten.

11. Fahrzeug, **dadurch gekennzeichnet, dass** es das Lidar und das System nach einem der Ansprüche 5 bis 8 und ein Ortungssystem umfasst, wobei
das Ortungssystem ausgelegt ist zum Bestimmen von Koordinateninformationen des Objekts außerhalb des Fahrzeugs basierend auf Koordinateninformationen eines Lasersenders, einer Differenz zwischen einer Zeit, zu der der Lasersender einen Laserstrahl sendet, und einer Zeit, zu der ein Laserdetektor den von dem Objekt außerhalb des Fahrzeugs reflektierten Laserstrahl empfängt, um das Objekt außerhalb des Fahrzeugs zu orten, wenn die Punktwolkenqualität des Lidars eine vorgegebene Bedingung erfüllt.

12. Steuergerät, das einen Prozessor und ein Speichergerät einschließt, das eingerichtet ist, um eine Vielzahl von Programmcodeabschnitten zu speichern, wobei die Programmcodeabschnitte eingerichtet sind, um geladen und durch den Prozessor ausgeführt zu werden, um ein Verfahren zum Bewerten einer Punktwolkenqualität eines Lidars nach einem der Ansprüche 1 bis 4 durchzuführen oder ein Verfahren zum Orten eines Objekts außerhalb eines Fahrzeugs basierend auf einem Lidar nach Anspruch 10 durchzuführen.

13. Computerlesbares Speichermedium mit einer Vielzahl von darin gespeicherten Programmcodeabschnitten, wobei die Programmcodeabschnitte eingerichtet sind, um geladen und durch den Prozessor ausgeführt zu werden, um ein Verfahren zum Bewerten einer Punktwolkenqualität eines Lidars nach einem der Ansprüche 1 bis 4 durchzuführen oder ein Verfahren zum Orten eines Objekts außerhalb eines Fahrzeugs basierend auf einem Lidar nach Anspruch 10 durchzuführen.

**Revendications**

1. Procédé destiné à évaluer une qualité de nuages de points d'un Lidar, le Lidar comprenant un émetteur laser (11), un détecteur laser (12), une cible (13) et un boîtier (14), l'émetteur laser (11), le détecteur laser (12) et la cible (13) étant tous disposés dans le boîtier (14), et la cible (13) étant conçue pour recevoir un faisceau laser émis par l'émetteur laser (11) et pour réfléchir le faisceau laser jusqu'au détecteur laser (12),
**caractérisé en ce que** :
le procédé d'évaluation comprend les étapes suivantes :

détermination (S201) d'un paramètre d'évaluation sur la base d'informations de coordonnées de l'émetteur laser, d'une différence entre un moment auquel l'émetteur laser émet un faisceau laser et un moment auquel un détecteur laser reçoit le faisceau laser réfléchi par une cible, et d'une réflectivité d'une surface de la cible, le paramètre d'évaluation comprenant une distance jusqu'à la cible depuis l'émetteur laser, des informations de coordonnées de la cible, et une réflectivité de la cible vis-à-vis du faisceau laser ;
détermination (S202) d'un nombre de nuages de points sur la base d'un nombre de faisceaux laser reçus par le détecteur laser et réfléchis par la cible ; et
comparaison (S203) du paramètre d'évaluation et du nombre de nuages de points, respectivement avec un paramètre d'évaluation prédéfini et un nombre de nuages de points prédéfini, pour obtenir un résultat d'évaluation de la qualité de nuages de points du Lidar.

**2.** Procédé destiné à évaluer une qualité de nuages de points d'un Lidar selon la revendication 1, la détermination d'un paramètre d'évaluation sur la base d'informations de coordonnées de l'émetteur laser, d'une différence entre un moment auquel l'émetteur laser émet un faisceau laser et un moment auquel un détecteur laser reçoit le faisceau laser réfléchi par une cible, et d'une réflectivité d'une surface de la cible comprenant :

la détermination de la distance jusqu'à la cible depuis l'émetteur laser sur la base de la différence entre le moment auquel l'émetteur laser émet le faisceau laser et le moment auquel le détecteur laser reçoit le faisceau laser ; la détermination des informations de coordonnées de la cible sur la base des informations de coordonnées de l'émetteur laser et de la distance jusqu'à la cible depuis l'émetteur laser ; et la détermination de la réflectivité de la cible vis-à-vis du faisceau laser sur la base de la distance jusqu'à la cible depuis l'émetteur laser, de la réflectivité de la surface de la cible, d'une puissance d'émission de l'émetteur laser, d'un angle d'incidence du faisceau laser, d'un coefficient de transmission de l'émetteur laser, d'un coefficient de transmission atmosphérique, et d'une ouverture de récepteur pour le détecteur laser, une formule de calcul pour la réflectivité de la cible vis-à-vis du faisceau laser étant comme suit :

$$P_R = (P_E * p * cos\,\alpha * K_1 * K_2 * D_R^2) \div (4R^2)$$

où $P_R$ est la réflectivité de la cible vis-à-vis du faisceau laser, $P_E$ est la puissance d'émission de l'émetteur laser, p est la réflectivité de la surface de la cible, $\alpha$ est l'angle d'incidence du faisceau laser, $K_1$ est le coefficient de transmission de l'émetteur laser, $K_2$ est le coefficient de transmission atmosphérique, $D_R$ est l'ouverture de récepteur pour le détecteur laser, et R est la distance jusqu'à la cible depuis l'émetteur laser.

**3.** Procédé destiné à évaluer une qualité de nuages de points d'un Lidar selon la revendication 1 ou 2, dans lequel un plan miroir (15) est disposé sur le boîtier, et une réflectivité d'une surface de la cible est supérieure à celle d'autres composants dans le Lidar.

**4.** Procédé destiné à évaluer une qualité de nuages de points d'un Lidar selon l'une quelconque des revendications 1 à 3, dans lequel la cible est disposée à un bord d'un angle de champ du Lidar et est disposée à une position prédéfinie d'une paroi interne du boîtier.

**5.** Système destiné à évaluer une qualité de nuages de points d'un Lidar, qui est appliqué à un Lidar, le Lidar comprenant un émetteur laser (11), un détecteur laser (12), une cible (13) et un boîtier (14), l'émetteur laser (11), le détecteur laser (12) et la cible (13) étant tous disposés dans le boîtier (14), et la cible (13) étant conçue pour recevoir un faisceau laser émis par l'émetteur laser (11) et pour réfléchir le faisceau laser jusqu'au détecteur laser (12), **caractérisé en ce que** : le système d'évaluation comprend :

un module d'obtention conçu pour déterminer un paramètre d'évaluation sur la base d'informations de coordonnées d'un émetteur laser, d'une différence entre un moment auquel l'émetteur laser émet un faisceau laser et un moment auquel un détecteur laser reçoit le faisceau laser réfléchi par une cible, et d'une réflectivité d'une surface de la cible, le paramètre d'évaluation comprenant une distance jusqu'à la cible depuis l'émetteur laser, des informations de coordonnées de la cible, et une réflectivité de la cible vis-à-vis du faisceau laser ; un module de détermination conçu pour déterminer un nombre de nuages de points sur la base d'un nombre de faisceaux laser reçus par le détecteur laser et réfléchis par la cible ; et un module d'évaluation conçu pour comparer le paramètre d'évaluation et le nombre de nuages de points, respectivement avec un paramètre d'évaluation prédéfini et un nombre de nuages de points prédéfini, pour obtenir un résultat d'évaluation de la qualité de nuages de points du Lidar.

**6.** Système destiné à évaluer une qualité de nuages de points d'un Lidar selon la revendication 5, dans lequel le module d'obtention comprend :

un module de détermination de distance conçu pour déterminer la distance jusqu'à la cible depuis l'émetteur laser sur la base de la différence entre le moment auquel l'émetteur laser émet le faisceau laser et le moment auquel le détecteur laser reçoit le faisceau laser ; un module de détermination de coordonnées conçu pour déterminer les informations de coordonnées de la cible sur la base des informations de coordonnées de l'émetteur laser et de la distance jusqu'à la cible depuis l'émetteur laser ; et

un module de détermination de réflectivité conçu pour déterminer la réflectivité de la cible vis-à-vis du faisceau laser sur la base de la distance jusqu'à la cible depuis l'émetteur laser, de la réflectivité de la surface de la cible, d'une puissance d'émission de l'émetteur laser, d'un angle d'incidence du faisceau laser, d'un coefficient de transmission de l'émetteur laser, d'un coefficient de transmission atmosphérique, et d'une ouverture de récepteur pour le détecteur laser, une formule de calcul pour la réflectivité de la cible vis-à-vis du faisceau laser étant comme suit :

$$P_R = (P_E * p * cos\,\alpha * K_1 * K_2 * D_R^2) \div (4R^2)$$

où $P_R$ est la réflectivité de la cible vis-à-vis du faisceau laser, $P_E$ est la puissance d'émission de l'émetteur laser, p est la réflectivité de la surface de la cible, $\alpha$ est l'angle d'incidence du faisceau laser, $K_1$ est le coefficient de transmission de l'émetteur laser, $K_2$ est le coefficient de transmission atmosphérique, $D_R$ est l'ouverture de récepteur pour le détecteur laser, et R est la distance jusqu'à la cible depuis l'émetteur laser.

7. Système destiné à évaluer une qualité de nuages de points d'un Lidar selon la revendication 5 ou 6, dans lequel un plan miroir (15) est disposé sur le boîtier, et une réflectivité d'une surface de la cible est supérieure à celle d'autres composants dans le Lidar.

8. Système destiné à évaluer une qualité de nuages de points d'un Lidar selon l'une quelconque des revendications 5 à 7, dans lequel la cible est disposée à un bord d'un angle de champ du Lidar et est disposée à une position prédéfinie d'une paroi interne du boîtier.

9. Véhicule, **caractérisé en ce qu'**il comprend le Lidar et le système selon l'une quelconque des revendications 5 à 8.

10. Procédé destiné à localiser un objet à l'extérieur d'un véhicule à l'aide d'un Lidar, **caractérisé en ce que** le procédé de localisation comprend les étapes suivantes :

évaluation (S401) d'une qualité de nuages de points d'un Lidar au moyen d'un procédé destiné à évaluer une qualité de nuages de points d'un Lidar selon l'une quelconque des revendications 1 ou 4 ;
balayage (S402) de l'objet à l'extérieur du véhicule au moyen du Lidar ; et
quand la qualité de nuages de points du Lidar respecte une condition prédéfinie, détermination (S403) d'informations de coordonnées de l'objet à l'extérieur du véhicule sur la base d'informations de coordonnées d'un émetteur laser, d'une différence entre un moment auquel l'émetteur laser émet un faisceau laser et un moment auquel un détecteur laser reçoit le faisceau laser réfléchi par l'objet à l'extérieur du véhicule, pour localiser l'objet à l'extérieur du véhicule.

11. Véhicule, **caractérisé en ce qu'**il comprend le Lidar et le système selon l'une quelconque des revendications 5 à 8 et un système de localisation, dans lequel
le système de localisation est conçu pour, quand la qualité de nuages de points du Lidar respecte une condition prédéfinie, déterminer des informations de coordonnées de l'objet à l'extérieur du véhicule sur la base d'informations de coordonnées d'un émetteur laser, d'une différence entre un moment auquel l'émetteur laser émet un faisceau laser et un moment auquel un détecteur laser reçoit le faisceau laser réfléchi par l'objet à l'extérieur du véhicule, pour localiser l'objet à l'extérieur du véhicule.

12. Appareil de contrôle, comportant un processeur et un appareil de stockage adapté pour stocker une pluralité de morceaux de code de programme, les morceaux de code de programme étant adaptés pour être chargés et exécutés par le processeur pour effectuer un procédé destiné à évaluer une qualité de nuages de points d'un Lidar selon l'une quelconque des revendications 1 à 4, ou pour effectuer un procédé destiné à localiser un objet à l'extérieur d'un véhicule à l'aide d'un Lidar selon la revendication 10.

13. Support de stockage lisible par ordinateur dans lequel est stockée une pluralité de morceaux de code de programme, les morceaux de code de programme étant adaptés pour être chargés et exécutés par un processeur pour effectuer un procédé destiné à évaluer une qualité de nuages de points d'un Lidar selon l'une quelconque des revendications 1 à 4, ou pour effectuer un procédé destiné à localiser un objet à l'extérieur d'un véhicule à l'aide d'un Lidar selon la revendication 10.

*FIG. 1*

Start

Determine an evaluation parameter based on coordinate information of a laser transmitter, a difference between a time at which the laser transmitter transmits a laser beam and a time at which a laser detector receives the laser beam reflected by a target, and a reflectivity of a surface of the target — S201

Determine a number of point clouds based on the laser beam received by the laser detector and reflected by the target — S202

Compare the evaluation parameter and the number of point clouds respectively with a preset evaluation parameter and a preset number of point clouds, to obtain an evaluation result — S203

End

*FIG. 2*

14

*FIG. 3*

```
                              ┌──────────┐
                              │  Start   │
                              └──────────┘
                                    │
                                    ▼
┌────────────────────────────────────────────────────────────────────┐  S401
│        Evaluate a point cloud quality of a laser radar               │
└────────────────────────────────────────────────────────────────────┘
                                    │
                                    ▼
┌────────────────────────────────────────────────────────────────────┐  S402
│     Scan an object outside a vehicle by using the laser radar        │
└────────────────────────────────────────────────────────────────────┘
                                    │
                                    ▼
┌────────────────────────────────────────────────────────────────────┐  S403
│   When the point cloud quality of the laser radar meets a preset     │
│ condition, determine coordinate information of the object outside the │
│  vehicle based on coordinate information of a laser transmitter, a    │
│  difference between a time at which the laser transmitter transmits a │
│  laser beam and a time at which a laser detector receives the laser   │
│   beam reflected by the object outside the vehicle, to locate the     │
│                   object outside the vehicle                         │
└────────────────────────────────────────────────────────────────────┘
                                    │
                                    ▼
                              ┌──────────┐
                              │   End    │
                              └──────────┘
```

*FIG. 4*

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020110259 A1
- US 2020150243 A1

- DE 102019117821 A1